(19) Europäisches Patentamt
European Patent Office
Office européen des brevets

(11) **EP 4 539 132 A1**

(12) **EUROPEAN PATENT APPLICATION**

(43) Date of publication:
**16.04.2025 Bulletin 2025/16**

(21) Application number: **23306794.1**

(22) Date of filing: **13.10.2023**

(51) International Patent Classification (IPC):
**H01M 4/04** $^{(2006.01)}$

(52) Cooperative Patent Classification (CPC):
**H01M 4/0409; H01M 4/0435**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Automotive Cells Company SE**
**33520 Bruges (FR)**

(72) Inventors:
• **BEN ALI, Imed Eddine**
  **69002 LYON (FR)**
• **ZIER, Martin**
  **33110 LE BOUSCAT (FR)**

(74) Representative: **Lavoix**
  **2, place d'Estienne d'Orves**
  **75441 Paris Cedex 09 (FR)**

(54) **METHOD OF MANUFACTURING AN ELECTRODE FOR A LITHIUM BATTERY USING A SOLVENT-FREE PROCESS**

(57)   The manufacturing method is intended to manufacture an electrode (28) comprising a substrate (26) and at least one film (22, 24) coating the substrate (26). The method comprises calendering a dry powder mixture (12) in a first calendering device (14) including at least two cylinders comprising a first cylinder (18a) having a first rotation speed V1 and a second cylinder (18b) having a second rotation speed V2, the dry powder mixture (12) being supplied between the first (18a) and second (18b) cylinders. The percentage difference $\frac{V1-V2}{V1}$ between the first rotation speed V1 and the second rotation speed V2 is comprised between 1% and 40%.

FIG.1

EP 4 539 132 A1

**Description**

The present invention relates to a method of manufacturing an electrode for a lithium battery using a solvent-free process (also called "dry process").

A method for manufacturing an electrode is already known in prior art. In such a dry process, a blend of material free of solvent is calendered to get a film intended to be coated onto a substrate. Such a method comprises passing the blend of material between two rotating cylinders.

The material usually comprises a binder, in particular a polymer. The rotating cylinders rotate with different rotation speed, generating a friction into the material, creating a fibrillation of the binder. Thus, the friction generates a network structure that ensures a good film cohesion.

Usually, in prior art, the speed ratio between the two cylinders is between 50% and 75%.

The invention is intended to improve such a manufacturing method, by increasing the rate of production and decrease the costs.

To this end, the invention relates to a manufacturing method for manufacturing an electrode comprising a substrate and at least one film coating the substrate, the method comprising calendering a dry powder mixture in a calendering device including at least two cylinders comprising a first cylinder having a first rotation speed V1 and a second cylinder having a second rotation speed V2, the dry powder mixture being supplied between the first and second cylinders, characterized in that the percentage difference $\frac{V1-V2}{V1}$ between the first rotation speed V1 and the second rotation speed V2 is comprised between 1% and 40%.

Whereas prior art teaches away from the invention by prompting to calender with a percentage difference between the rotation speeds which is above 50%, the inventors established that a percentage difference under 40% is sufficient to get a good film cohesion.

By using a lower speed percentage difference, the cylinders are less solicited. Indeed, the frictions involved in prior art tends to wear down the cylinders. This wear is greatly lowered in the invention.

As a result, there is a lower need of maintenance and downtime due to the cylinders wear. This leads to a better rate of production and decreases the maintenance costs.

Besides, in prior art, the cylinders need high power motors to rotate against the resistance due to the friction. Since the speed ratio is lower in the invention, the friction is reduced and the motor needs less power to rotate. This involves less energy consumption than in prior art.

A method of the invention optionally comprises any of the following features, taken alone or in any possible combination.

- The dry powder mixture comprises a conductive material, an active material and binders, each made of particles of size range between $1\mu m$ and $500\mu m$.
- . The manufacturing method uses a manufacturing system comprising, in addition to the first calendering device, a second calendering device comprising at least two cylinders, including a third and a fourth cylinder, the first calendering device and second calendering device having adjacent cylinders forming together a lamination device, the manufacturing method comprising:

  - providing dry powder mixture between the first and second cylinders, to form a first film by calendering,
  - providing dry powder mixture between the third and fourth cylinders, to form a second film by calendering,
  - coating the substrate with the first and second films by passing them in the lamination device.

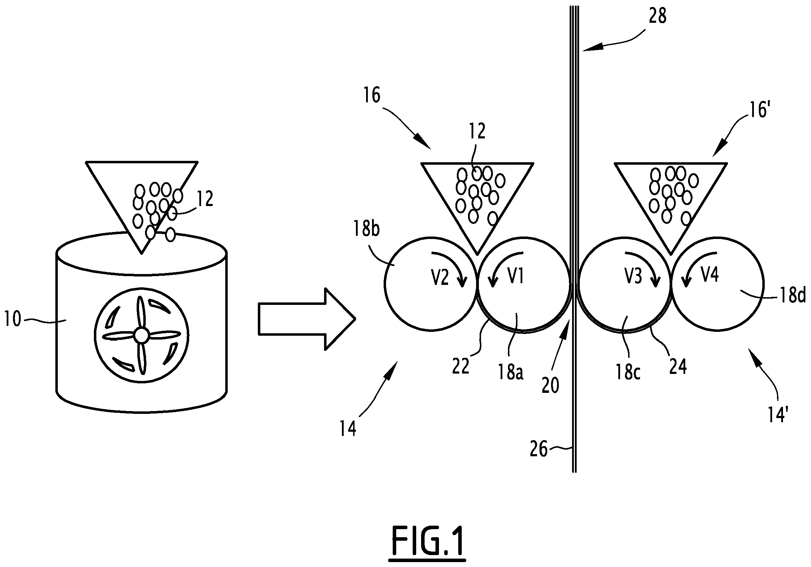

- The cylinders forming the lamination device have substantially equal rotation speeds.
- The cylinders are heated at a temperature between 80°C and 150°C, preferentially between 110°C and 130°C.
- Each calendering device comprises more than two cylinders.
- In each couple of adjacent cylinders of the calendering device, the percentage difference between the rotation speeds of these adjacent cylinders is comprised between 1% and 40%. Several aspects and advantages of the invention will be enlightened in the following disclosure, only given as a non-limitative example and made in reference to the attached drawings, in which Figure 1 is a schematic view of an assembly for implementing a manufacturing method according to an example of embodiment of the invention.

Figure 1 shows a blender 10 for blending materials intended to form an electrode film.

The materials forms a typical dry powder mixture 12 usually used to manufacture electrodes. The material comprise a conductive material, an active material, and preferentially binders.

The powder is designed as "dry" because it is devoid of solvent or equivalent.

We remind here that an active material is a material which reacts electrochemically to produce electrical energy when the cell discharges. For example, the active material is lithium iron phosphate. For example, the conductive material is made of carbon nanotubes, and the binders is PTFE (polytetrafluoroethylene).

Preferentially, the dry powder comprises about 94% of active material, between 1 and 4% of binders, and less than 2% of conductive material.

Preferentially, the powder is made of particles of

size range between 1μm and 500μm.

The dry powder mixture 12 is intended to feed a calendering device 14, 14' by mean of a feeding device 16, 16'.

Figure 1 shows two calendering device, a first calendering device 14 and a second calendering device 14' arranged side by side in order to form together a lamination device 20 between them. A first feeding device 16 feeds the first calendering device 14 and a second feeding device 16' feeds the second calendering device 14'.

Each calendering device 14, 14' comprises at least two cylinders.

In the shown example, the first calendering device 14 comprises a first cylinder 18a and a second cylinder 18b. The second calendering device 14 comprises a third cylinder 18c and a fourth cylinder 18d.

In a not shown example, each calendering device comprises more than two cylinders.

Each cylinder 18a, 18b, 18c, 18d is heated, preferentially at a temperature between 80°C and 150°C, preferentially between 110°C and 130°C.

The first cylinder 18a rotates at a first rotation speed V1.

The second cylinder 18b rotates at a second rotation speed V2. The second cylinder 18b and the first cylinder 18b rotate in opposite directions.

The third cylinder 18c rotates at a third rotation speed V3.

The fourth cylinder 18d rotates at a fourth rotation speed V4. The fourth cylinder 18d and the third cylinder 18c rotate in opposite directions.

Besides, in the shown example, the first cylinder 18a and the third cylinder 18c rotate in opposite directions.

In a non-limitative example, the first rotation speed V1 is substantially equal to the third rotation speed V3. In this case, the second rotation speed V2 is preferentially substantially equal to the fourth rotation speed V4.

The first feeding device 16 feeds powder 12 between the first cylinder 18a and the second cylinder 18b of the first calendering device 14.

The second feeding device 16' feeds powder 12 between the third cylinder 18c and the fourth cylinder 18d of the second calendering device 14'.

Preferentially, the first speed V1 is higher than the second speed V2, so that the calendered powder forms a first film 22 on the first cylinder 18a. In a preferred embodiment, the first cylinder 18a has an adhesion-enhancing surface, and the second cylinder 18b has an adhesion-reducing surface, in order to ensure the first film 22 be formed on the first cylinder 18a.

In the same manner, the third speed V3 is higher than the fourth speed V4, so that the calendered powder forms a second film 24 on the third cylinder 18c. In a preferred embodiment, the third cylinder 18c has an adhesion-enhancing surface, and the fourth cylinder 18d has an adhesion-reducing surface, in order to ensure the second film 24 be formed on the third cylinder 18c.

In the shown example, the lamination device 20 is formed by the first cylinder 18a and the third cylinder 18c. Thus, since the first film 22 is formed on the first cylinder 18a, it is conveyed to the lamination device 20, and since the second film 24 is formed on the third cylinder 18c, it is conveyed to the lamination device 20.

A substrate 26 is driven in the lamination device 20, between the first cylinder 18a and the third cylinder 18c, so the first film 22 comes coating a first face of the substrate 26, and the second film 24 comes coating a second face of the substrate 26.

The substrate 26 coated on its two faces forms an electrode 28.

The disclosed embodiment allows a continuous manufacturing of the electrode 28, since the laminating device 20 is arranged in a direct downstream of the calendering devices 14, 14'.

In a non-represented embodiment, the system comprises only one calendering device, so the film is applied on the substrate by other means.

According to the invention, the percentage difference $\frac{V1-V2}{V1}$ between the first rotation speed V1 and the second rotation speed V2 is comprised between 1% and 40%. Preferentially, the percentage difference is 30%.

In the same manner, the percentage difference $\frac{V3-V4}{V3}$ between the third rotation speed V3 and the fourth rotation speed V4 is comprised between 1% and 40%.

Preferentially, the percentage difference is 30%.

It should be noticed that a reduction of percentage difference from 75% (usual in prior art) to 30% allows a reduction of electrical consumption of 5 to 10%.

Besides, the reduction of differential speed between the cylinders reduces the frictions and thus reduces the wear of the cylinders.

Thus, the system needs less maintenance than in prior art, so the productivity is increased because of less downtime.

The invention is not limited to the example above and it may present some variants.

For example, as indicated previously, each calendering device 14, 14' may comprise more than two cylinders. In this case, the laminating device 20 is still formed by the adjacent cylinders of the two calendering devices (in the middle). The other cylinders serve for film formation.

In this case, the percentage difference between the rotation speed of at least two adjacent cylinders of each calendering device 14, 14' is comprised between 1% and 40%. Preferentially, this percentage difference is met for the cylinders where the dry powder is inserted between.

Optionally, the percentage difference is comprised between 1% and 40% for each couple of adjacent cylinders of each calendering device 14, 14'.

In order to convey the film from the feeding device 16, 16' to the lamination device 20, the rotation speed of the cylinders increases from the feeding device to the lamination device.

The rotation speeds of the cylinders forming the lamination device 20 are substantially equals.

**Claims**

1. A manufacturing method for manufacturing an electrode (28) comprising a substrate (26) and at least one film (22, 24) coating the substrate (26), the method comprising calendering a dry powder mixture (12) in a first calendering device (14) including at least two cylinders comprising a first cylinder (18a) having a first rotation speed V1 and a second cylinder (18b) having a second rotation speed V2, the dry powder mixture (12) being supplied between the first (18a) and second (18b) cylinders, **characterized in that** the percentage difference $\frac{V1-V2}{V1}$ between the first rotation speed V1 and the second rotation speed V2 is comprised between 1% and 40%.

2. The manufacturing method according to claim 1, wherein the dry powder mixture (12) comprises a conductive material, an active material and binders, each made of particles of size range between 1$\mu$m and 500$\mu$m.

3. The manufacturing method according to claim 1 or 2, using a manufacturing system comprising, in addition to the first calendering device (14), a second calendering device (14') comprising at least two cylinders, including a third (18c) and a fourth (18d) cylinder, the first calendering device (14) and second calendering device (14') having adjacent cylinders (18a, 18c) forming together a lamination device (20), the manufacturing method comprising:

   - providing dry powder mixture (12) between the first (18a) and second (18b) cylinders, to form a first film (22) by calendering,
   - providing dry powder mixture (12) between the third (18c) and fourth (18d) cylinders, to form a second film (24) by calendering,
   - coating the substrate (26) with the first (22) and second (24) films by passing them in the lamination device (20).

4. The manufacturing method according to claim 3, wherein the cylinders forming the lamination device (20) have substantially equal rotation speeds.

5. The manufacturing method according to any of preceding claims, wherein the cylinders (18a, 18b, 18c, 18d) are heated at a temperature between 80°C and 150°C, preferentially between 110°C and 130°C.

6. The manufacturing method according to any of preceding claims, wherein each calendering device (14, 14') comprises more than two cylinders.

7. The manufacturing method according to claim 6, wherein, in each couple of adjacent cylinders of each calendering device (14, 14'), the percentage difference between the rotation speeds of these adjacent cylinders is comprised between 1% and 40%.

## FIG.1

Europäisches
Patentamt

European
Patent Office

Office européen
des brevets

# EUROPEAN SEARCH REPORT

Application Number

EP 23 30 6794

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/320288 A1 (ALTHUES HOLGER [DE] ET AL) 14 October 2021 (2021-10-14) <br> * paragraph [0009] * <br> * paragraph [0012] * <br> * paragraph [0036] – paragraph [0039] * <br> * paragraph [0041] – paragraph [0042] * <br> * paragraph [0045] * | 1,2,5-7 | INV. <br> H01M4/04 |
| X <br> A | WO 2014/156464 A1 (ZEON CORP [JP]) 2 October 2014 (2014-10-02) <br> * paragraph [0001] * | 1,2 <br> 3-7 | |
| E | WO 2024/006763 A2 (TEXAS A & M UNIV SYS [US]) 4 January 2024 (2024-01-04) <br> * paragraph [0029] * <br> * paragraph [0031] * <br> * paragraph [0039] * | 1 | |
| | | | **TECHNICAL FIELDS SEARCHED (IPC)** <br><br> H01M |

The present search report has been drawn up for all claims

| Place of search | Date of completion of the search | Examiner |
|---|---|---|
| Munich | 29 February 2024 | Huber, Gerrit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 30 6794**

This annex lists the patent family members relating to the patent documents cited in the above-mentioned European search report.
The members are as contained in the European Patent Office EDP file on
The European Patent Office is in no way liable for these particulars which are merely given for the purpose of information.

**29-02-2024**

| Patent document cited in search report | Publication date | Patent family member(s) | Publication date |
|---|---|---|---|
| US 2021320288 A1 | 14-10-2021 | CN 110869179 A | 06-03-2020 |
| | | CN 115071025 A | 20-09-2022 |
| | | DE 102017208220 A1 | 22-11-2018 |
| | | EP 3625018 A1 | 25-03-2020 |
| | | EP 4119323 A1 | 18-01-2023 |
| | | JP 7248835 B2 | 29-03-2023 |
| | | JP 2020522090 A | 27-07-2020 |
| | | JP 2022062188 A | 19-04-2022 |
| | | JP 2023103999 A | 27-07-2023 |
| | | KR 20200020702 A | 26-02-2020 |
| | | KR 20220098052 A | 08-07-2022 |
| | | RS 64947 B1 | 31-01-2024 |
| | | US 2021320288 A1 | 14-10-2021 |
| | | WO 2018210723 A1 | 22-11-2018 |
| WO 2014156464 A1 | 02-10-2014 | CN 105190957 A | 23-12-2015 |
| | | JP 6086384 B2 | 01-03-2017 |
| | | JP 2014191880 A | 06-10-2014 |
| | | KR 20150134310 A | 01-12-2015 |
| | | WO 2014156464 A1 | 02-10-2014 |
| WO 2024006763 A2 | 04-01-2024 | NONE | |

EPO FORM P0459

For more details about this annex : see Official Journal of the European Patent Office, No. 12/82